# EUROPEAN PATENT APPLICATION

(11) **EP 4 734 298 A1**
(43) Date of publication of application: **29.04.2026**
(21) Application number: 24831501.2
(22) Date of filing: 22.05.2024
(51) Int. Cl.: H01R 25/14, H02G 3/04, H02G 3/38

(54) **WIRING DUCT AND WIRING DUCT SYSTEM**

(30) Priority: 26.06.2023 JP 2023104491
(71) Applicant: Panasonic Intellectual Property Management Co., Ltd., Kadoma-shi, Osaka 571-0057 (JP)
(72) Inventor: IKEDA, Satoshi, Kadoma-shi, Osaka 571-0057 (JP)
(74) Representative: Appelt, Christian W.
(86) International application number: PCT/JP2024/018874
(87) International publication number: WO 2025/004630

(57) **Abstract**

An object of the present disclosure is to improve the degree of freedom in an installation place. A wiring duct (1) includes a first conductor (E1), a second conductor (E2), a body (10), and an insulation member (3). The first conductor (E1) is configured to be supplied with a first voltage from a power supply. The second conductor (E2) is configured to supply a second voltage to a load, the second voltage being lower than the first voltage. The body (10) holds the first conductor (E1) and the second conductor (E2). The first conductor (E1) is held by the body (10) in a state where the first conductor (E1) is covered with the insulation member (3). The second conductor (E2) is held by the body (10) in a state where the second conductor (E2) is at least partially exposed. The second voltage is a direct-current voltage lower than or equal to a predetermined value.

## Description

### Technical Field

The present disclosure generally relates to wiring ducts and wiring duct systems.

### Background Art

Patent Literature 1 discloses a wiring duct including a line for conducting electric power and a line for transmission of communication.

In such a wiring duct as disclosed in Patent Literature 1, the line for conducting electric power, to which a higher voltage is supplied than to the line for transmission of communication, is in an exposed state, and therefore, there is the problem that the wiring duct cannot be installed in a place where there is the possibility that part of the body (e.g., a hand) of a user comes into contact with the line for conducting electric power.

### Citation List

### Patent Literature

Patent Literature 1: JP 2012-009258 A

### Summary of Invention

In view of the foregoing, it is an object of the present disclosure to provide a wiring duct and a wiring duct system which are configured to provide an increased degree of freedom in an installation place.

A wiring duct of an aspect of the present disclosure includes: a first conductor configured to be supplied with a first voltage from a power supply; a second conductor configured to supply a second voltage to a load, the second voltage being lower than the first voltage; a body holding the first conductor and the second conductor; and an insulation member. The first conductor is held by the body in a state where the first conductor is covered with the insulation member. The second conductor is held by the body in a state where the second conductor is at least partially exposed. The second voltage is a direct-current voltage lower than or equal to a predetermined value.

The wiring duct system according to an aspect of the present disclosure includes: the wiring duct; another wiring duct configured to be electrically connected to the first conductor; and a power feed member configured to supply the first voltage from the power supply to the first conductor.

### Brief Description of Drawings

[FIG. 1] FIG. 1 is an outline view of a usage example of a wiring duct system according to an embodiment of the present disclosure;
[FIG. 2] FIG. 2 is a sectional view of a wiring duct included in the wiring duct system;
[FIG. 3] FIG. 3 is a schematic wiring diagram of the wiring duct system; and
[FIG. 4] FIG. 4 is a schematic wiring diagram of a wiring duct system of a comparative example.

### Description of Embodiments

A wiring duct 1 according to an embodiment of the present disclosure will be described in detail with reference to the drawings. Note that figures described in the following embodiment are schematic views, and the ratio of sizes and the ratio of thicknesses of components in the figures do not necessarily reflect actual dimensional ratios. Moreover, a "wiring duct" which is the wiring duct 1 described below is also referred to as an electrified track. Further, the "wiring duct" is also referred to as a wiring duct rail. Furthermore, the embodiment and variations described below are mere examples of the present disclosure, and the present disclosure is not limited to the embodiments and the variations. The present disclosure may be modified variously without departing from the scope of the present disclosure, even if not including the embodiment and the variations, according to a design or the like. Further, the embodiment described below (including the variations) may be implemented appropriately in combination.

### (1) Overview

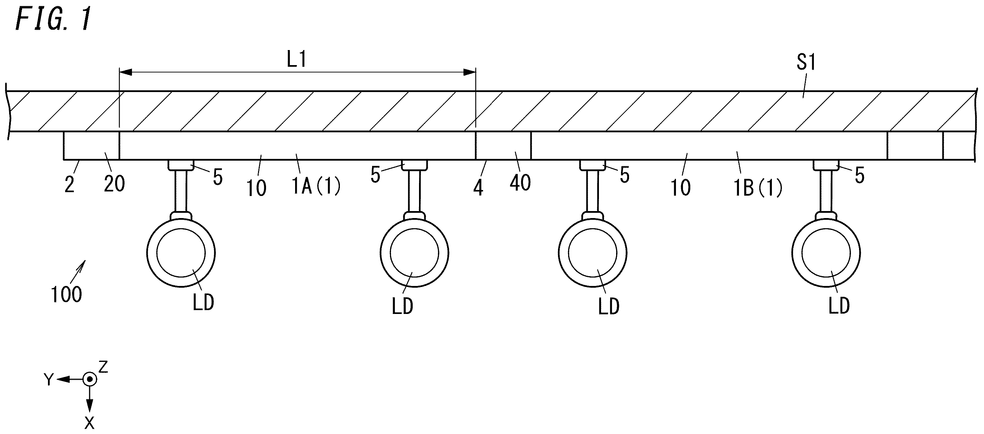

First of all, the overview of the wiring duct 1 and a wiring duct system 100 according to the present embodiment will be described with reference to FIGS. 1 to 3.

As shown in FIG. 1, the wiring duct system 100 is installed on a construction surface S1 of a facility. Note that the wiring duct system 100 is preferably housed in a connection member and is preferably installed on the construction surface S1 via the connection member, illustration of which is omitted in FIG. 1.

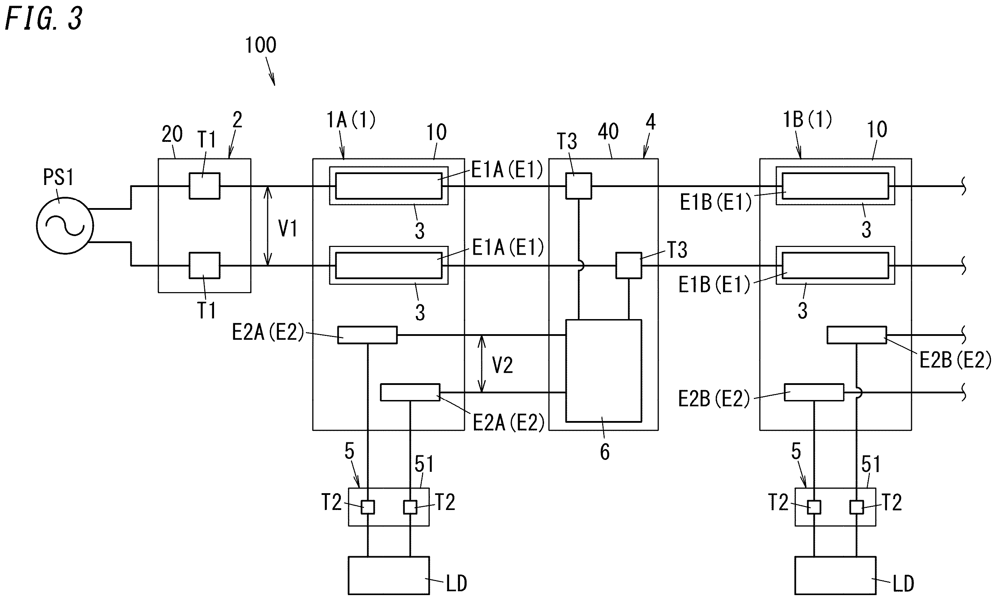

The wiring duct system 100 includes a wiring duct 1 (1A), another wiring duct (wiring duct 1 (1B)), and a power feed member 2 which supplies a voltage from a power supply PS1 (see FIG. 3) to the wiring ducts 1.

The wiring duct 1 are used to supply electric power to a load LD in the facility. As used herein, the "facility" may be a dwelling house or may be a non-dwelling house. Examples of the dwelling house may include detached dwelling houses and multiple dwelling houses. Examples of the non-dwelling house may include office buildings, commercial facilities, guest accommodations, complex facilities, warehouses, and factories. Moreover, the load LD is, for example, a lighting fixture, a monitoring camera, a motion sensor, or a reeler electrical outlet.

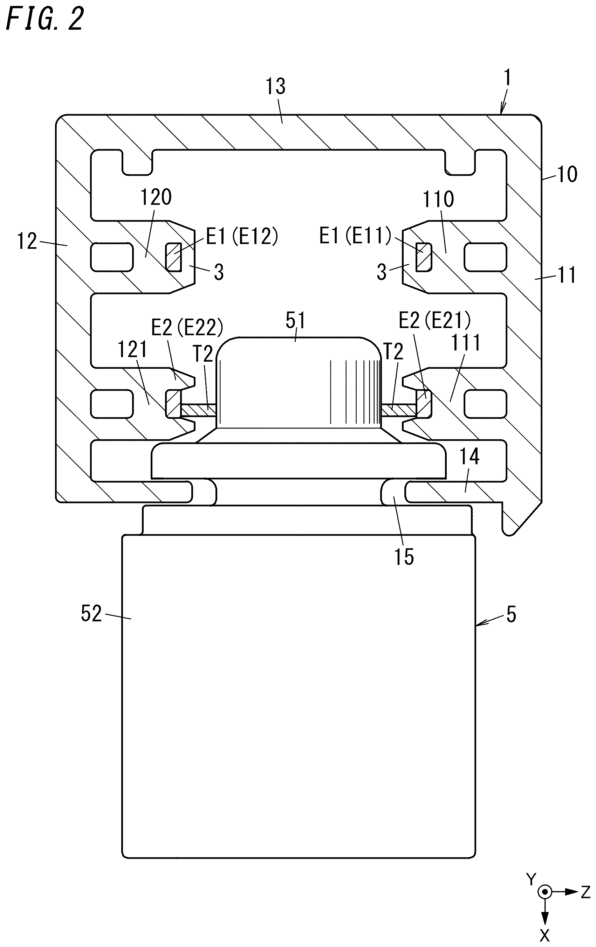

As shown in FIG. 2, each wiring duct 1 includes a first conductor E1, a second conductor E2, a body 10, and an insulation member 3.

The first conductor E1 is supplied with a first voltage V1 from the power supply PS1 (see FIG. 3).

The second conductor E2 supplies a second voltage V2 to the load LD. The second voltage V2 is lower than the first voltage V1.

The body 10 holds the first conductor E1 and the second conductor E2.

The first conductor E1 is held by the body 10 in a state where the first conductor E1 is covered with the insulation member 3.

The second conductor E2 is held by the body 10 in a state where the second conductor E2 is at least partially exposed.

The second voltage V2 is a direct-current voltage lower than a predetermined value.

In the configuration described above, the first conductor E1, to which the first voltage V1 is to be supplied, is held by the body 10 in a state where the first conductor E1 is covered with the insulation member 3. Moreover, the second voltage V2 supplied by the second conductor E2 exposed is a direct-current voltage lower than the first voltage V1. Thus, this configuration enables the wiring duct 1 and the wiring duct system 100 to be installed also in a place where there is the possibility that part of the body (e.g., a finger of a hand) of a user comes into contact with the first conductor E1. Therefore, this configuration enables the degree of freedom in an installation place of the wiring duct system 100 to be increased.

Note that in the following description, in a state where the wiring duct system 100 is installed on, for example, a wall surface which is the construction surface S1, a direction orthogonal to the wall surface is defined as a "front/rear direction", and a normal direction to the wall surface is defined as a "front side". Moreover, a longitudinal direction of the wiring duct 1 is defined as a "left/right direction", and a direction orthogonal to the "front/rear direction" and the "left/right direction" is defined as an "up/down direction". Specifically, the description is given provided that in FIGS. 1 and 2, the positive direction of an X axis is defined as the "front side", the positive direction of a Y axis is defined as a "left side", and the positive direction of a Z axis is defined as an "upper side". Note that arrows indicating an X-axis direction, a Y-axis direction, and a Z-axis direction in the drawings are shown merely for the sake of description and are intangible. Moreover, these directions are not to limit the installation state and installation place of the wiring duct system 100.

Moreover, in the present disclosure, the "orthogonal" direction does not strictly mean only a 90-degrees direction but also includes a direction(s) that can be regarded as the same as the 90-degrees direction according to the common general knowledge in the art as long as the present embodiment provides the desired effect.

### (2) Configuration

With reference to the drawings, the configuration of the wiring duct system 100 will be described below in detail.

As shown in FIGS. 1 and 3, the wiring duct system 100 includes the wiring duct 1 (1A), another wiring duct (wiring duct 1 (1B)), and the power feed member 2. Moreover, the wiring duct system 100 further includes a relay member 4 for connecting the wiring duct 1 (1A) to the another wiring duct (wiring duct 1 (1B)). Note that the another wiring duct connected to the wiring duct 1 may be another wiring duct 1 or a wiring duct having a different configuration from the wiring duct 1.

As shown in FIG. 2, the wiring duct 1 includes the body 10, a pair of first conductors E1, a pair of second conductors E2, and a pair of insulation members 3.

As shown in FIG. 1, the body 10 has an elongated shape extended in one direction (in the present embodiment, in the left/right direction).

In the present embodiment, the body 10 has a length L1 of, for example, 3 m in the left/right direction. Note that the length L1 is not limited to 3 m but may be, for example, 1 m, 1.5 m, or 2 m. Moreover, the length L1 may be equal to the integral multiple of 1 m, 1.5 m, 2 m, or 3 m. Note that the length L1 is preferably shorter than or equal to 6 m. Here, the wiring duct system 100 may include a plurality of types of wiring ducts 1 different from each other in the length L1.

As shown in FIG. 2, the body 10 has wall parts 11 and 12 facing each other in the up/down direction and wall parts 13 and 14 facing each other in the front/rear direction. The wall part 13 mechanically connects rear ends of the wall parts 11 and 12 to each other. In other words, the body 10 has a U-shaped cross section formed by the wall part 13 and the wall parts 11 and 12 protruding frontward from both ends of the wall part 13.

The wall part 14 of the body 10 has an opening 15 extending in the left/right direction. At an arbitrary location in the left/right direction of the opening 15, the load LD is connectable via a connect device 5 which will be described later.

As shown in FIGS. 2 and 3, the body 10 holds the pair of first conductors E1 and the pair of second conductors E2 arranged in the left/right direction. In other words, the pair of first conductors E1 and the pair of second conductors E2 are held in the left/right direction by the body 10.

as shown in FIG. 2, one first conductor E11 of the pair of first conductors E1 is held by the wall part 11. Moreover, the other first conductor E12 of the pair of first conductors E1 is held by the wall part 12. Specifically, of the pair of first conductors E1, the one first conductor E11 is held by a tip end of a projection 110 of the wall part 11, and the other first conductor E12 is held by a tip end of a projection 120 of the wall part 12.

Moreover, the pair of first conductors E1 is held by the projections 110 and 120 on a one-to-one basis in a state where the pair of first conductors E1 are covered with the pair of insulation members 3.

The pair of insulation members 3 are formed from an insulator, such as a synthetic resin. The pair of insulation members 3 are integral with, for example, the projections 110 and 120 on a one-to-one basis. Note that the pair of insulation members 3 may be components separate from the respective projections 110 and 120.

As shown in FIG. 3, the pair of first conductors E1 are supplied with the first voltage V1 from the power supply PS1 via the power feed member 2. In the present embodiment, the power supply PS1, which feeds power to the pair of first conductors E1, is assumed to be a single phase two-wire commercial alternating-current power supply. That is, the first voltage V1 is an alternating-current voltage. Note that the power supply PS1 may be a commercial alternating-current power supply of a single phase three-wire system or may be a commercial alternating-current power supply of a three-phase three-wire system. Moreover, the first voltage V1 is an alternating-current voltage with a power supply frequency of 50 Hz or 60 Hz and an effective value of 100 V. Note that the first voltage V1 may be an alternating-current voltage with an effective value of 200 V.

Here, the pair of first conductors E1 are covered with the pair of insulation members 3, and therefore, for example, also when a user of the wiring duct system 100 accidentally inserts part of the body (e.g., a finger of a hand) of the user through the opening 15 into the body 10, the possibility that the part of the body of the user comes into direct contact with the first conductor(s) E1 is low. Thus, the wiring duct system 100 may be installed also on a construction surface S1, such as a wall surface or a bottom surface, where there is the possibility that the body of the user comes into contact with the first conductor(s) E1 besides a construction surface S1 (e.g., a ceiling) which the body of the user cannot reach. Moreover, the wiring duct system 100 may also be installed on a place, for example, furniture and fixtures, such as a desk, which the body of the user can reach.

The power feed member 2 is a so-called feed-in cap and is connected to an end (e.g., left end) of the body 10 in the left/right direction as shown in FIG. 1.

As shown in FIG. 2, the power feed member 2 includes a body 20 and a pair of connection terminals T1 held by the body 20.

To the pair of connection terminals T1, a pair of electric wires connected to the power supply PS1 are connected on a one-to-one basis. Moreover, to the pair of connection terminals T1, the pair of first conductors E1 are connected on a one-to-one basis. Thus, the pair of first conductors E1 are supplied with the first voltage V1 from the power supply PS1 via the power feed member 2. In other words, the power feed member 2 supplies the first voltage V1 from the power supply PS1 to the pair of first conductors E1.

Next, the pair of second conductors E2 will be described. As shown in FIG. 2, one second conductor E21 of the pair of second conductors E2 is held by the wall part 11. Moreover, the other second conductor E22 of the pair of second conductors E2 is held by the wall part 12. Specifically, of the pair of second conductors E2, the one second conductor E21 is held by a tip end of a projection 111 of the wall part 11, and the other second conductor E22 is held by a tip end of a projection 121 of the wall part 12. Here, the projections 111 and 121 are respectively disposed downward of the projections 110 and 120. That is, the pair of second conductors E2 are located frontward of the pair of first conductors E1.

Moreover, the pair of second conductors E2 are held by the projections 111 and 121 on a one-to-one basis in a state where the pair of second conductors E2 are at least partially exposed as shown in FIG. 2. Specifically, the second conductor E2 held by the projection 111 is exposed downward. Moreover, the second conductor E2 held by the projection 121 is exposed upward.

The pair of second conductors E2 supply the second voltage V2 to the load LD. The second the V2 is produced by stepping down the first voltage V1 by a step-down member 6 (see FIG. 3) described later. That is, the second voltage V2 is a voltage lower than the first voltage V1. More specifically, the second voltage V2 is a direct-current voltage lower than or equal to a predetermined value. That is, the step-down member 6 includes an AC-DC converter. The step-down member 6 will be described in "(3) Connection State" in detail.

The predetermined value of the second voltage V2 is at least set such that the second voltage V2 is lower than a so-called dangerous voltage which may cause an electrical shock. As an example, the predetermined value is 60 V. Moreover, the predetermined value is preferably 48 V, more preferably 42 V. Further, when the wiring duct system 100 is installed in a place where water is used (toilet, kitchen, etc.), the predetermined value is preferably 30 V.

Further, in the present embodiment, the value of the second voltage V2 is set such that the first voltage V1 is two or more times the second voltage V2. Specifically, the first voltage V1, which is the alternating-current voltage with the effective value of 100 V, is stepped down by using the step-down member 6 to the second voltage V2 with a direct-current voltage of 24 V.

Thus, for example, it is possible to reduce the possibility that when the wiring duct system 100 is installed in a place which the body of the user can reach, the user receives an electrical shock in case of accidental contact of part of the body of the user with the second conductor(s) E2.

Incidentally, the load LD such as a lighting device is connected via the connect device 5 to the pair of second conductors E2 as shown in FIGS. 1 to 3. The connect device 5 will be described below.

As shown in FIG. 2, the connect device 5 includes a duct connector 51 and a holder 52.

As shown in FIG. 2, the duct connector 51 has a columnar shape extending in the front/rear direction. The duct connector 51 includes a pair of power receiving terminals T2. The pair of power receiving terminals T2 are electrically connected to the pair of second conductors E2 on a one-to-one basis in a state where the duct connector 51 is attached to the wiring duct 1. The pair of power receiving terminals T2 are disposed at an upper end of the duct connector 51.

The pair of power receiving terminals T2 are metal pieces protruding in directions opposite to each other in the up/down direction in a state where the connect device 5 is connected to the wiring duct 1.

The holder 52 is a housing that holds the duct connector 51. The holder 52 has, for example, an oval shape when viewed, for example, in the front/rear direction. Moreover, to the holder 52, the load LD is electrically connected from the front. Specifically, to the holder 52, a feed line extending from the load LD is connected. A power feeding cable includes, for example, a pair of conductive lines, and the pair of conductive lines are electrically connected to the pair of power receiving terminals T2 on a one-to-one basis.

As shown in FIGS. 1 and 3, the relay member 4 is a so-called joiner for connecting the wiring duct 1 to another wiring duct. Note that the another wiring duct, which is to be connected to the wiring duct 1 by using the relay member 4, may be another wiring duct 1 or may be a wiring duct having a different configuration from the wiring duct 1.

As shown in FIG. 3, the relay member 4 includes a pair of relay terminals T3, a body 40 for holding the pair of relay terminals T3, and the step-down member 6 connected to the pair of relay terminals T3. Note that the step-down member 6 may be a component separate from the relay member 4.

Details of connecting the wiring duct 1 to the another wiring duct 1 by using the relay member 4 will be described in "(3) Connection State".

### (3) Connection State

A connection state of the wiring duct 1 (1A) and the another wiring duct 1 (1B) which are connected to each other by using the relay member 4 will be described below.

As shown in FIG. 1, the relay member 4 connects a right end of the wiring duct 1A and a left end of the wiring duct 1B to each other.

In a state where the wiring duct 1A and the wiring duct 1B are connected to each other by the relay member 4 (hereinafter referred to as a connection state), the pair of relay terminals T3 are connected to the pair of first conductors E1 (E1A) of the wiring duct 1A on a one-to-one basis as shown in FIG. 3. Moreover, in the connection state, the pair of relay terminals T3 are connected to the pair of first conductors E1 (E1B) of the wiring duct 1B on a one-to-one basis. Therefore, the pair of first conductors E1A are electrically connected to the pair of first conductors E1B via the pair of relay terminals T3. That is, the first conductors E1A of the wiring duct 1A are configured to be electrically connectable to the wiring duct 1B which is the another wiring duct. Note that as used herein, "electrically connect" means a state where inflow and outflow of a current between two targets of connection are possible.

Thus, the pair of first conductors E1B are supplied with the first voltage V1 from the pair of first conductors E1A via the pair of relay terminals T3.

Moreover, the step-down member 6 is connected to the pair of relay terminals T3 as described above. That is, the step-down member 6 is supplied with the first voltage V1 from the pair of first conductors E1A via the pair of relay terminals T3.

Further, in the connection state, the pair of second conductors E2 (E2A) of the wiring duct 1A are connected to the step-down member 6. Here, the step-down member 6 is a member including an AC-DC converter that steps down the first voltage V1, which is the alternating-current voltage with the effective value of 100 V, to produce the second voltage V2, which is a direct-current voltage of 24 V, as described above. That is, the step-down member 6 steps down the first voltage V1 supplied via the pair of relay terminals T3 from the pair of first conductors E1A to the second voltage V2 and supplies the second voltage V2 to the pair of second conductors E2A.

The second voltage V2 supplied to the pair of second conductors E2A is supplied to the load LD via the pair of power receiving terminals T2 of the connect device 5. That is, a current flows to the load LD from the power supply PS1 via the pair of first conductors E1A and the pair of second conductors E2A.

Here, the pair of second conductors E2A are configured to be electrically unconnectable to the wiring duct 1B. Specifically, the pair of second conductors E2A and the pair of second conductors E2B are configured to be unconnectable to each other in the connection state. Moreover, no current flows from the pair of first conductors E1B of the wiring duct 1B via the pair of second conductors E2A to the load LD in the connection state.

### (4) Advantages

An advantage of the wiring duct system 100 of the present embodiment when a wiring duct is connected to another wiring duct will be described below in comparison with a wiring duct system 100C of a comparative example.

First of all, the wiring duct system 100C of the comparative example will be described. Note that in the description of the wiring duct system 100C of the comparative example, elements common to the description of the wiring duct system 100 of the present embodiment are denoted by the same reference signs, and the description thereof will be omitted.

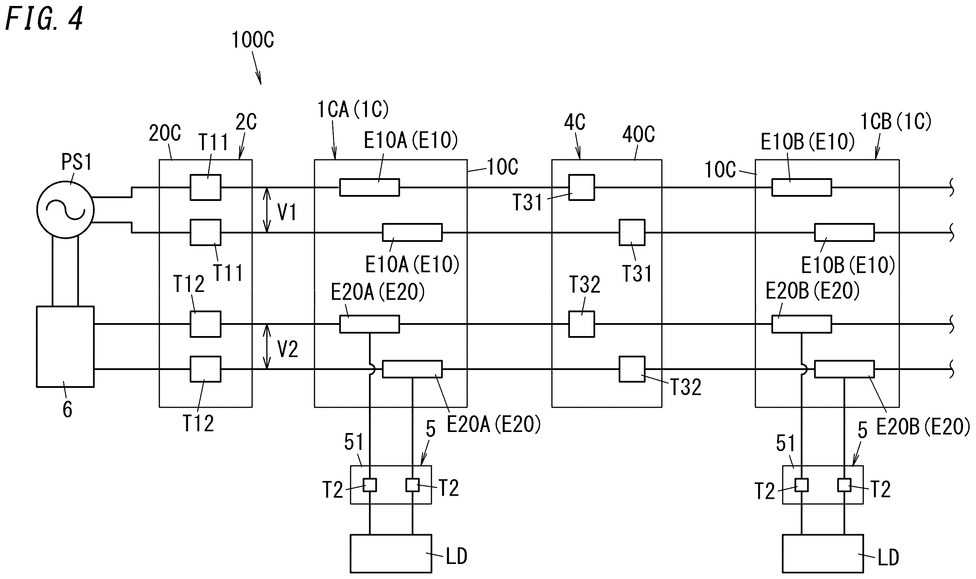

As shown in FIG. 4, the wiring duct system 100C of the comparative example includes a wiring duct 1C, a power feed member 2C, a relay member 4C for connecting the wiring duct 1C to another wiring duct, and a step-down member 6 connected to a power supply PS1.

The wiring duct 1C includes a body 10C, a pair of first conductors E10, and a pair of second conductors E20.

The power feed member 2C includes a body 20C, a pair of first connection terminals T11, and a pair of second connection terminals T12. To the pair of first connection terminals T11, a pair of electric wires connected to the power supply PS1 are connected on a one-to-one basis. Moreover, the pair of first conductors E10 are connected to the pair of first connection terminals T11 on a one-to-one basis. The power supply PS1 is connected to the pair of second connection terminals T12 via the step-down member 6. Moreover, the pair of second conductors E20 are connected to the pair of second connection terminals T12.

The relay member 4C includes a pair of first relay terminals T31, a pair of second relay terminals T32, and a body 40C.

A connection state of the wiring duct 1C (1CA) to another wiring duct 1C (1CB) by using the relay member 4C will be described below.

In a state where the wiring duct 1CA and the wiring duct 1CB are connected to each other by the relay member 4C (hereinafter referred to as a connection state), the pair of first relay terminals T31 are connected to the pair of first conductors E10 (E10A) of the wiring duct 1CA on a one-to-one basis. Moreover, in the connection state, the pair of first relay terminals T31 are connected to a pair of first conductors E10 (E10B) of the wiring duct 1CB on a one-to-one basis. That is, the pair of first conductors E10A are connected to the pair of first conductors E10B on a one-to-one basis via the pair of first relay terminals T31.

Thus, the pair of first conductors E10B are supplied with a first voltage V1 (an alternating-current voltage with an effective value of 100 V) from the pair of first conductors E10A via the pair of first relay terminals T31.

Moreover, in the connection state, the pair of second relay terminals T32 are connected to the pair of second conductors E20 (E20A) of the wiring duct 1CA on a one-to-one basis. Moreover, in the connection state, the pair of second relay terminals T32 are connected to a pair of second conductors E20 (E20B) of the wiring duct 1CB on a one-to-one basis. That is, the pair of second conductors E20A are connected to the pair of second conductors E20B via the pair of second relay terminals T32.

Thus, the pair of second conductors E20B are supplied with a second voltage V2 (a direct-current voltage of 24 V) from the pair of second conductors E20A via the pair of second relay terminals T32.

As described above, in the wiring duct system 100C of the comparative example, power transmission between the wiring duct 1C and the another wiring duct 1C is performed by each of the first voltage V1, which is the alternating-current voltage with the effective value of 100 V and the second voltage V2, which is a direct-current voltage of 24 V.

Here, an electric power loss during the power transmission increases as a voltage used for the power transmission decreases. This is because in the case of transmitting electric power having the same power value, the lower the voltage is, the larger the current. In particular, the longer a power transmission pathway is, the more susceptible the power transmission is to the electric power loss.

In contrast, in the wiring duct system 100 of the present embodiment, the power transmission between the wiring duct 1 and the another wiring duct 1 is performed only at the first voltage V1, which is the alternating-current voltage of 100 V, as described in "(3) Connection State". The second voltage V2, which is a direct-current voltage of 24 V, is supplied to the load LD only in the one wiring duct 1 but is not used for power transmission to the another wiring duct 1.

Therefore, the wiring duct system 100 of the present embodiment enables the electric power loss during the power transmission from the wiring duct 1 to the another wiring duct 1 to be reduced. In particular, when on the construction surface S1 or the like of the facility, three or more wiring ducts 1 are connected by using two or more relay members 4, the effect of reducing the electric power loss during the power transmission more significantly appears.

### (5) Variations

The embodiment described above is a mere example of various embodiments of the present disclosure. The embodiment described above may be variously modified depending on design or the like as long as the object of the present disclosure is achieved.

Variations of the embodiment described above are enumerated below. Any of the variations to be described below may be combined as appropriate.

In the embodiment described above, the first voltage V1 supplied from the power supply PS1 to the pair of first conductors E1 is the alternating-current voltage, but the first voltage V1 may be a direct-current voltage. That is, the first voltage V1 and the second voltage V2 may be direct-current voltages. The first voltage V1, which is the direct-current voltage, is a direct-current voltage of, for example, 400 V. In this case, the step-down member 6 includes at least a DC-DC converter. Moreover, in this case, an AC-DC converter is at least provided, for example, between the power supply PS1 and the power feed member 2. Moreover, the power supply which supplies the first voltage V1 to the pair of first conductors E1 may be a direct-current power supply such as a battery.

### (6) Summary

As described above, a wiring duct (1) of a first aspect includes a first conductor (E1), a second conductor (E2), a body (10), and an insulation member (3). The first conductor (E1) is configured to be supplied with a first voltage (V1) from a power supply (PS1). The second conductor (E2) is configured to supply a second voltage (V2) lower than the first voltage (V1) to a load (LD). The body (10) holds the first conductor (E1) and the second conductor (E2). The first conductor (E1) is held by the body (10) in a state where the first conductor (E1) is covered with the insulation member (3). The second conductor (E2) is held by the body (10) in a state where the second conductor (E2) is at least partially exposed. The second voltage (V2) is a direct-current voltage lower than or equal to a predetermined value.

This aspect enables the degree of freedom in an installation place of the wiring duct (1) to be increased.

In a wiring duct (1) of a second aspect referring to the first aspect, the predetermined value is 60 V.

This aspect enables the possibility that a user receives an electrical shock in case of accidental contact of part of the body of the user with the second conductor (E2) to be reduced, thereby increasing safety.

In a wiring duct (1) of a third aspect referring to the first or second aspect, the first conductor (E1) is configured to be electrically connectable to another wiring duct. The second conductor (E2) is configured to be electrically unconnectable to the another wiring duct.

This aspect enables an electric power loss during power transmission from the wiring duct (1) to the another wiring duct to be reduced.

In a wiring duct (1) of a fourth aspect referring to the first to third aspects, the body (10) has an elongated shape extending in one direction. The first conductor (E1) and the second conductor (E2) are held in the one direction by the body (10). The body (10) has a length (L1) shorter than or equal to 6 m in the one direction.

This aspect enables the efficiency in installation of the wiring duct (1) to be improved.

In a wiring duct (1) of a fifth aspect referring to the first to fourth aspect, the first voltage (V1) is two or more times the second voltage (V2).

With this aspect, the first voltage (V1) being two or more times the second voltage (V2) enables an electric power loss during power transmission from the wiring duct (1) to the another wiring duct (1) at the first voltage (V1) to be reduced.

In a wiring duct (1) of a sixth aspect referring to the first to fifth aspect, the first voltage (V1) is an alternating-current voltage.

With this aspect, the first voltage (V1) is easily stepped down to the second voltage (V2).

In a wiring duct (1) of a seventh aspect referring to the first to fifth aspects, the first voltage (V1) is a direct-current voltage.

This aspect enables the electric power loss during power transmission at the first voltage (V1) to be reduced.

A wiring duct system (100) of an eighth aspect includes the wiring duct (1) of the first to seventh aspects, another wiring duct configured to be electrically connected to the first conductor (E1), and a power feed member (2) configured to supply the first voltage (V1) from the power supply (PS1) to the first conductor (E1).

This aspect enables the degree of freedom in an installation place of the wiring duct system (100) to be increased. Moreover, this aspect enables an electric power loss during power transmission from the wiring duct (1) to the another wiring duct to be reduced.

A wiring duct system (100) of a ninth aspect referring to the eighth aspect further includes a step-down member (6) configured to step down the first voltage (V1) to the second voltage (V2) and supply the second voltage (V2) to the second conductor (E2).

This aspect enables the degree of freedom in an installation place of the wiring duct system (100) to be increased. Moreover, this aspect enables an electric power loss during power transmission from the wiring duct (1) to the another wiring duct to be reduced.

Note that the second to seventh aspects are not configurations essential for the wiring duct (1) and may accordingly be omitted. Moreover, the ninth aspect is not a configuration essential for the wiring duct system (100) and may accordingly be omitted.

### Reference Signs List

- 1: Wiring Duct
- 2: Power Feed Member
- 3: Insulation Member
- 6: Step-Down Member
- 10: Body
- 100: Wiring Duct System
- E1: First Conductor
- E2: Second Conductor
- L1: Length
- LD: Load
- PS1: Power Supply
- V1: First Voltage
- V2: Second Voltage

## Claims

1. A wiring duct comprising:
a first conductor configured to be supplied with a first voltage from a power supply;
a second conductor configured to supply a second voltage to a load, the second voltage being lower than the first voltage;
a body holding the first conductor and the second conductor; and
an insulation member,
the first conductor being held by the body in a state where the first conductor is covered with the insulation member,
the second conductor being held by the body in a state where the second conductor is at least partially exposed,
the second voltage being a direct-current voltage lower than or equal to a predetermined value.

2. The wiring duct of claim 1, wherein
the predetermined value is 60 V.

3. The wiring duct of claim 1 or 2, wherein
the first conductor is configured to be electrically connectable to another wiring duct, and
the second conductor is configured to be electrically unconnectable to the another wiring duct.

4. The wiring duct of any one of claims 1 to 3, wherein
the body has an elongated shape extending in one direction,
the first conductor and the second conductor are held in the one direction by the body, and
the body has a length shorter than or equal to 6 m in the one direction.

5. The wiring duct of any one of claims 1 to 4, wherein
the first voltage is two or more times the second voltage.

6. The wiring duct of any one of claims 1 to 5, wherein
the first voltage is an alternating-current voltage.

7. The wiring duct of any one of claims 1 to 5, wherein
the first voltage is a direct-current voltage.

8. A wiring duct system comprising:
the wiring duct of any one of claims 1 to 7;
another wiring duct configured to be electrically connected to the first conductor; and
a power feed member configured to supply the first voltage from the power supply to the first conductor.

9. The wiring duct system of claim 8, further comprising a step-down member configured to step down the first voltage to the second voltage and supply the second voltage to the second conductor.
